# EUROPEAN PATENT SPECIFICATION

(11) **EP 2 644 491 B1**
(45) Date of publication and mention of the grant of the patent: **29.11.2017**
(21) Application number: 13160347.4
(22) Date of filing: 21.03.2013
(51) Int. Cl.: G05G 1/10, B62K 23/04

(54) **Throttle device**
Drosselvorrichtung
Dispositif de régulateur de papillon

(30) Priority: 27.03.2012 JP 2012071913
(43) Date of publication of application: 02.10.2013
(73) Proprietor: Honda Motor Co., Ltd., Tokyo 107-8556 (JP)
(72) Inventor: Nomura, Yoshihiro, Saitama, 351-0193 (JP); Tanaka, Kunihiko, Saitama, 351-0193 (JP); Tamaki, Kenji, Saitama, 351-0193 (JP); Shigemizu, Nobuo, Saitama, 351-0193 (JP); Nakayama, Masaru, Saitama, 351-0193 (JP)
(74) Representative: Weickmann & Weickmann PartmbB

(56) References cited:
- EP-A1- 2 128 010
- WO-A1-2009/124907
- WO-A1-2011/121047
- US-A1- 2009 007 716

## Description

### Technical Field

The present invention relates to a throttle device mounted on a motorcycle.

### Background Art

In a motorcycle, an acceleration grip is mounted on a handle bar. When a rider rotates the acceleration grip in the circumferential direction, a throttle valve mounted on an internal combustion engine performs an open/close operation.

It is necessary to control the open/close operation of the throttle valve in such a manner that an open/close amount of the throttle valve corresponds to a rotational amount of the acceleration grip. Accordingly, a throttle device is mounted on a handle bar, and the rotational amount of the acceleration grip is detected by the throttle device.

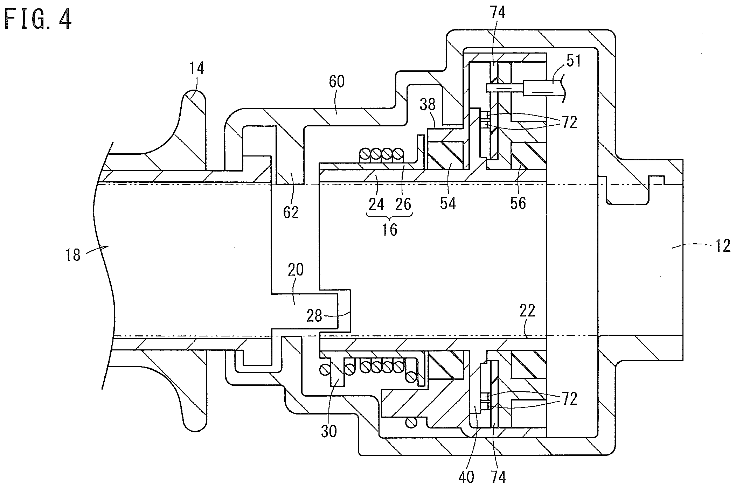

This type of throttle device includes a rotor which is rotated in an interlocking manner with the manipulation of the acceleration grip, and a housing which houses the rotor. As shown in Fig. 4 of JP 2009-287411 A, a return spring for returning the rotated rotor to an original position is engaged with the rotor and the housing. That is, one end of the return spring is engaged with the rotor and the other end of the return spring is engaged with the housing.

When a rider rotates the acceleration grip along the circumferential direction, along with such rotation of the acceleration grip, the rotor is rotated and also the return spring extends. Further, when the rider loosens the acceleration grip, the extended return spring returns by an elastic action to the original shape of the extended return spring and, as a result, the rotor is rotated in the reverse direction and returns to the original position (angle) of the rotor.

WO 2009/124907 A1 discloses a throttle device according to the preamble of claim 1.

US 2009/007716 A1 shows a throttle device, wherein a rib for restricting the rotation of the acceleration grip is formed on the housing, and wherein the rib will also restrict movement of the acceleration grip toward a rotor side by contact of the rib with the wall of the slit-shaped notch hole.

### Summary of the Invention

### Problems that the Invention is to solve

The throttle device according to JP 2009-287411 A having the above-mentioned constitution is assembled in accordance with steps where an assembly of a detection means which detects a rotational angle of the rotor and the rotor is inserted into a handle bar and, thereafter, a housing is mounted so as to cover the assembly. Although one end of the return spring is already engaged with the rotor, it is not easy to engage the other end of the return spring to the housing. That is, the so-called assembling property is not favorable.

Further, in this case, one end of the return spring and an engaging hole formed in the housing are aligned with each other and, further, the position of the housing is adjusted after such alignment and hence, a tension acts on the return spring. When the tension is excessively large, there may be a case where an undesired stress is applied to the return spring. Assuming a case where such a state occurs, there is a possibility that quality (particularly durability) of the return spring will differ between a return spring to which a large amount of tension is applied and a return spring to which a small amount of tension is applied.

The present invention has been made to overcome the above-mentioned drawbacks, and it is an object of the present invention to provide a throttle device which can eliminate a possibility that the quality of the return spring will differ between the return spring to which a large amount of tension is applied and the return spring to which a small amount of tension is applied while enhancing assembling property.

### Means for solving problems

To achieve the above-mentioned object, the present invention provides a throttle device according to claim 1.

In assembling the throttle device (10) having such a constitution, it is sufficient that one end of the return spring (32) is engaged with an engaging member (26) of the rotor (16) and the other end of the return spring (32) is engaged with the casing (38) thus acquiring the assembly (70), the assembly (70) is inserted into the handle bar (12) and, thereafter, the housing (60) is mounted.

As can be understood from above, according to the present invention, it is unnecessary to engage the return spring (32) with the housing (60). Accordingly, the throttle device (10) can be easily assembled. That is, the assembling property can be enhanced.

Further, in assembling the throttle device (10) in this manner, a tension applied to the return spring (32) is extremely small. Accordingly, a stress applied to the return spring (32) becomes extremely small. Accordingly, the durability of the return spring (32) is enhanced.

Further, a tension applied to the return spring (32) becomes a fixed value, the degree of stress applied to the return spring (32) also becomes an approximately fixed value. As a result, it is possible to eliminate a possibility that quality of the return spring (32) becomes irregular (different).

It is preferable that a rib (62) for restricting the rotation of the acceleration grip (14) is formed on the housing (60). Due to such a constitution, it is possible to prevent the acceleration grip (14) from being excessively rotated. As a result, it is possible to prevent an excessively large amount of tension from being applied to the return spring (32) and hence, it is possible to prevent an excessively large stress from being applied to the return spring (32).

Further, it is preferable that engaging portions (20, 28) are formed on the acceleration grip (14) and the rotor (16) respectively, and the engaging portions (20, 28) are engaged with each other in a state where a clearance is formed therebetween. Due to such a constitution, even when the acceleration grip (14) is slightly rotated due to some reason, the rotation of the rotor (16) is obviated. Accordingly, in such a case, the opening of the throttle valve can be prevented.

As a preferred example of the detection means, a magnetic sensor (50) is named. Alternatively, a contact element (72) may be mounted on the rotor (16), and a resistor (74) with which the contact element (72) is brought into slide contact may be adopted as the detection means.

### Advantage of the Invention

According to the present invention, the assembly is provided such that one end of the return spring which returns the rotated rotor to an original position is engaged with the rotor and the other end of the return spring is engaged with the casing which houses the rotor thus constituting the assembly, and the assembly is housed in the housing. Accordingly, it is unnecessary to engage the return spring with the housing and hence, the throttle device can be easily assembled.

A tension applied to the return spring becomes extremely small and is set to a fixed value. Accordingly, a stress applied to the return spring becomes also extremely small and is set to an approximately fixed value and hence, it is possible to enhance the durability of the resilient biasing means and to eliminate a possibility that quality of the resilient biasing means becomes irregular (different).

### Brief Description of the Drawings

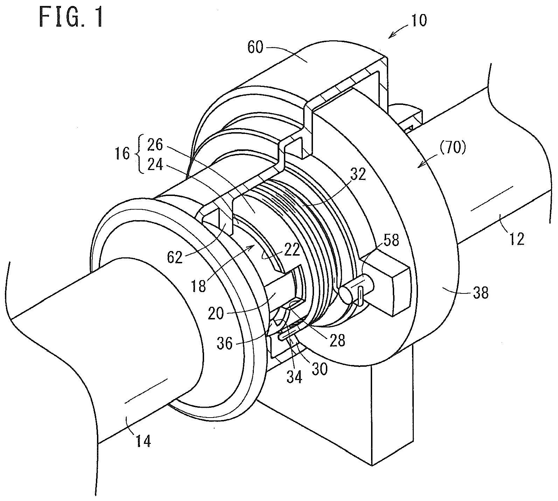

Fig. 1
   A perspective view with a part broken away of a throttle device according to an embodiment of the present invention.
Fig. 2
   A schematic vertical cross-sectional view of an essential part of the throttle device shown in Fig. 1.
Fig. 3
   A schematic perspective view showing the whole assembly of a rotor and a casing which constitute the throttle device shown in Fig. 1.
Fig. 4
   A schematic vertical cross-sectional view of an essential part of a throttle device according to another embodiment.

### Mode for carrying out the Invention

Hereinafter, a preferred embodiment of a throttle device according to the present invention is explained in detail in conjunction with attached drawings. In the explanation made hereinafter, an end portion of the drawing on a left side may be expressed as a left end portion, and an end portion of the drawing on a right side may be expressed as a right end portion.

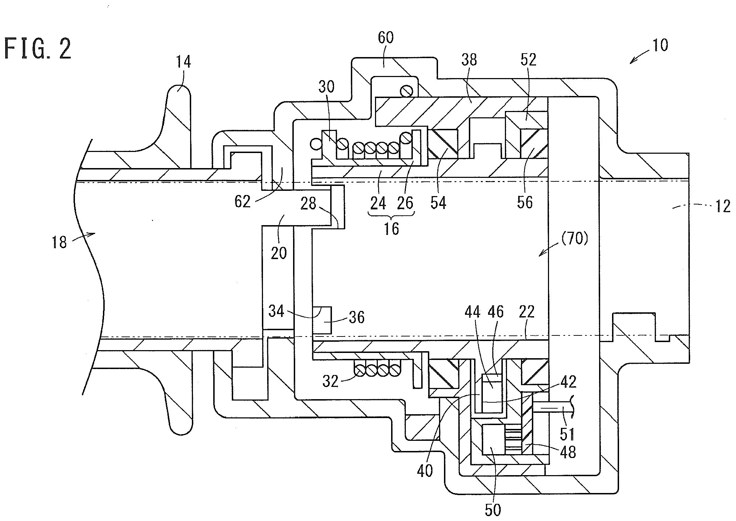

Fig. 1 is a perspective view with a part broken away of a throttle device 10 according to this embodiment, and Fig. 2 is a schematic vertical cross-sectional view of an essential part of the throttle device 10. The throttle device 10 is mounted on a handle bar 12 of a motorcycle, and converts a rotational amount (rotational angle) of a rotor 16 when an acceleration grip 14 is rotated due to the manipulation by a rider into an electric signal, and transmits the electric signal to an electronic control device (ECU or the like) not shown in the drawing.

A throttle pipe 18 is press-fitted into the acceleration grip 14. On an end portion of the throttle pipe 18 on a side close to the rotor 16 (a right end portion of the throttle pipe 18), an engaging projecting portion 20 which projects along the axial direction of the throttle pipe 18 is formed.

An insertion hole 22 is formed in the rotor 16 in a penetrating manner, and the handle bar 12 is inserted into the insertion hole 22. A predetermined clearance is formed between an inner wall of the insertion hole 22 and the handle bar 12 and hence, the rotor 16 is rotatable along the circumferential direction of the handle bar 12.

The rotor 16 is constituted of a rotor body 24, and an engaging member 26 which is fitted on the rotor body 24. That is, the rotor body 24 and the engaging member 26 are arranged concentrically.

On left end portions of the rotor body 24 and the engaging member 26, an engaging recessed portion 28 which is dented along the axial direction of the rotor body 24 and the engaging member 26 is formed respectively. The engaging projecting portion 20 which is formed on an end portion of the throttle pipe 18 enters the engaging recessed portion 28. Accordingly, when the throttle pipe 18 is rotated along with the rotation of the acceleration grip 14, the engaging projecting portion 20 pushes inner walls of the engaging recessed portions 28. As a result, the rotor 16 is rotated.

Although two engaging projecting portions 20 and two engaging recessed portions 28 are formed in a spaced apart manner from each other by 180° in an actual constitution, in Fig. 1 and Fig. 2, only one engaging projecting portion 20 and only one engaging recessed portion 28 are shown.

As can be easily understood from Fig. 2, the engaging projecting portion 20 and the engaging recessed portion 28 are spaced apart from each other with a predetermined distance therebetween and hence, a clearance is formed between the engaging projecting portion 20 and the engaging recessed portion 28.

Further, a columnar-shaped first engaging projection 30 is formed on an outer peripheral wall in the vicinity of the left end portion of the engaging member 26 such that the first engaging projection 30 projects outwardly in the radial direction. One end of a return spring 32 which constitutes a resilient biasing means is engaged with the first engaging projection 30 (particularly, see Fig. 1).

A plurality of connecting recessed portions 34 which are dented along the axial direction of the rotor body 24 are formed on a left end portion of the rotor body 24. On the other hand, a plurality of connecting projecting portions 36 which project inwardly in the diametrical direction are formed on an inner peripheral wall of the engaging member 26. By making the connecting projecting portions 36 fitted in the connecting recessed portions 34, the rotor body 24 and the engaging member 26 are connected to each other.

A right end portion of the rotor body 24 is housed in a casing 38. In other words, the left end portion of the rotor body 24 is exposed from the casing 38. The above-mentioned engaging member 26 is fitted on the exposed left end portion. A right end portion of the engaging member 26 is also inserted into the casing 38.

As shown in Fig. 2, a flange portion 40 which projects outwardly in the radial direction is formed on a right end portion of the rotor body 24 housed in the casing 38. A fitting recessed portion 42 is formed on the flange portion 40 in the vicinity of a peripheral portion of the flange portion 40 in a dented manner. A magnet 44 and a back yoke 46 are fitted in the fitting recessed portion 42.

A Hall element 50 which is electrically connected to a circuit board 48 is arranged outside the flange portion 40 in the radial direction. A magnetic flux density of a magnetic field generated by the magnet 44 and the back yoke 46 is detected by the Hall element 50. That is, the Hall element 50 is a detection means which detects a magnetic force and functions as a magnetic sensor.

The Hall element 50 outputs an electric signal corresponding to magnitude of the magnetic flux density. The electric signal is transmitted to an ECU or the like via a harness 51.

An inner member 52 which supports the circuit board 48 is interposed between a right end portion of the rotor body 24 and the casing 38. A portion of the inner member 52 covers the Hall element 50 so as to protect the Hall element 50.

In Fig. 2, reference symbols 54, 56 indicate a first sealing member and a second sealing member respectively.

As shown in Fig. 1, a second engaging projection 58 which extends along the axial direction of the acceleration grip 14 is formed on an end surface of the casing 38 which faces the acceleration grip 14 in an opposed manner. The other end of the return spring 32 is engaged with the second engaging projection 58.

The engaging member 26 is inserted into a spiral-shaped coil portion of the return spring 32. Accordingly, when the rotor 16 is rotated, one end of the return spring 32 which is engaged with the first engaging projection 30 is pulled. As a result, the return spring 32 is extended.

In the above-mentioned constitution, the rotor 16, the casing 38, the circuit board 48 and the Hall element 50 are housed in the housing 60 so that these parts are protected by the housing 60.

Ribs 62 are formed on an inner wall of the housing 60 in a radially inwardly extending manner. Although two ribs 62 are formed in an actual constitution, only one rib 62 is shown in Fig. 1 and Fig. 2.

The positions of the respective ribs 62 correspond to positions of the engaging projecting portions 20 formed on the throttle pipe 18. That is, when the throttle pipe 18 is rotated by a predetermined amount, the engaging projecting portion 20 is brought into contact with a side surface of either one of two ribs 62. Due to such a contact, the further rotation of the throttle pipe 18 is restricted.

A left bottom wall of the housing 60 is brought into contact with an outer peripheral wall of the acceleration grip 14, and the ribs 62 and a right bottom wall of the housing 60 are brought into contact with an outer peripheral wall of the handle bar 12.

The throttle device 10 according to this embodiment is substantially constituted as described above. Next, the manner of operation and advantageous effects of the throttle device 10 are explained.

In assembling the throttle device 10, the casing 38 is mounted on a portion (the right end portion in Fig. 1 and Fig. 2) of the rotor body 24 on which the magnet 44, the back yoke 46 and the like are preliminarily mounted. At this point of time, a remaining portion (the left end portion shown in Fig. 1 and Fig. 2) of the rotor body 24 is exposed.

On the other hand, the engaging member 26 is inserted into the spiral-shaped coil portion of the return spring 32. At this point of time, one end of the return spring 32 may be engaged with the first engaging projection 30 or may not be engaged with the first engaging projection 30.

Next, the left end portion of the rotor body 24 which is exposed from the casing 38 is inserted into the engaging member 26. Here, it is not particularly necessary to align the position of the connecting recessed portion 34 formed on the rotor body 24 and the position of the connecting projecting portion 36 formed on the engaging member 26 with each other. Due to such a constitution, the connecting projecting portion 36 formed on the engaging member 26 is brought into contact with the left end surface of the rotor body 24 and hence, the engaging member 26 is dammed up or stopped. As a result, an insertion amount of the engaging member 26 is made small.

In such a state, the other end of the return spring 32 is engaged with the second engaging projection 58 formed on the casing 38. When one end of the return spring 32 is not engaged with the first engaging projection 30 yet, one end of the return spring 32 is also engaged with the first engaging projection 30.

Next, the position of the connecting recessed portion 34 formed on the rotor body 24 and the position of the connecting projecting portion 36 of the engaging member 26 are aligned with each other by holding and rotating the engaging member 26. Here, although a tension is applied to the return spring 32 so that the return spring 32 is slightly extended, a rotational amount of the engaging member 26 is small and hence, a stress applied to the return spring 32 is also small.

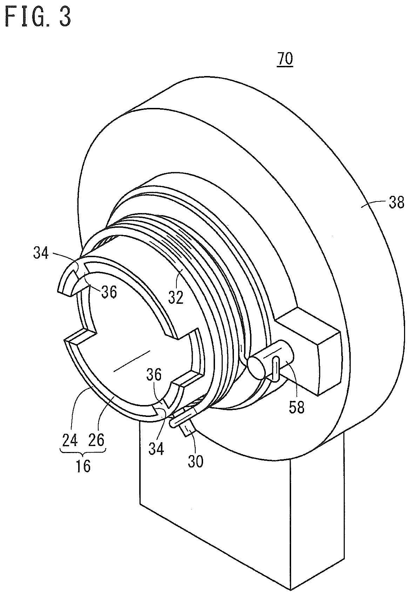

Then, the connecting projecting portion 36 is inserted into the connecting recessed portion 34 by pushing. Due to such an operation, the rotor body 24 and the engaging member 26 are connected to each other so that, as shown in Fig. 3, an assembly 70 constituted of the rotor 16 and the casing 38 can be obtained.

Next, the assembly 70 is inserted into the handle bar 12. Then, the throttle pipe 18 on which the acceleration grip 14 is fitted is mounted on the handle bar 12 and, thereafter, the housing 60 is mounted on the handle bar 12 thus constituting the throttle device 10. Here, the engaging projecting portion 20 of the throttle pipe 18 is inserted into the engaging recessed portion 28 of the rotor 16.

As described above, according to this embodiment, the return spring 32 can be easily engaged. That is, the assembling property of the throttle device 10 can be enhanced.

Further, a stress which is applied to the return spring 32 at the time of assembling the throttle device 10 is small as described above so that the durability of the return spring 32 is enhanced. In addition, in performing the above-mentioned assembling, a rotational amount of the engaging member 26 is set to a fixed value and hence, a stress applied to the resilient biasing means becomes also an approximately fixed value. Accordingly, it is possible to eliminate a possibility that quality of the resilient biasing means becomes different.

Further, a left bottom wall of the housing 60 is brought into contact with an outer peripheral wall of the acceleration grip 14, and the ribs 62 and the right bottom wall of the housing 60 are brought into contact with an outer peripheral wall of the handle bar 12 and hence, the positional displacement of the housing 60 hardly occurs. That is, a so-called play hardly occurs. Still further, a fixing width of the housing 60 can be made small and hence, the degree of freedom in laying out the throttle device 10 can be enhanced.

Next, the manner of operation of the throttle device 10 is explained.

The throttle device 10 is mounted on the bar handle 12 of the motorcycle. In such a state, a magnetic field is generated by the magnet 44 and the back yoke 46. A magnetic flux density in such a state is detected by the Hall element 50. The Hall element 50 outputs an electric signal with an output corresponding to magnitude of the magnetic flux density.

When a rider driving the motorcycle rotates the acceleration grip 14 mounted on the distal end of the handle bar 12 in the circumferential direction, the throttle pipe 18 is also rotated along with the rotation of the acceleration grip 14. As a result, the engaging projecting portion 20 formed on the throttle pipe 18 pushes the inner wall of the engaging recessed portion 28 formed on the rotor 16 and hence, the rotor 16 is rotated. Here, the return spring 32 is pulled and extended.

A predetermined clearance is formed between the engaging projecting portion 20 and the engaging recessed portion 28. Accordingly, for example, when a rider slightly rotates the acceleration grip 14 mistakenly, it is possible to prevent the occurrence of the above-mentioned rotation of the rotor 16 and extending of the return spring 32. That is, it is possible to prevent the throttle valve from being opened by erroneous driving.

Along with such rotation, positions of the magnet 44 and the back yoke 46 mounted on the rotor 16 are changed. Accordingly, a magnetic flux density in the vicinity of the Hall element 50 is changed. The Hall element 50 transmits an electric signal to the ECU and the like with an output amount corresponding to a change amount of the magnetic flux density.

By detecting a change amount of the magnetic flux density as described above, a rotational angle of the rotor 16, that is, a rotational amount of the acceleration grip 14 (throttle opening) can be easily evaluated.

When the rider releases his hand from the acceleration grip 14, the extended return spring 32 returns to an original state due to the elasticity of the return spring 32 and hence, the rotor 16, the throttle pipe 18 and the acceleration grip 14 return to their original positions respectively.

In the above-mentioned steps, when the throttle pipe 18 is rotated by a predetermined amount, the engaging projecting portion 20 is brought into contact with the side surface of either one of two ribs 62 as described above. Due to such a contact, the further rotation of the throttle pipe 18 and, eventually, the further rotation of the acceleration grip 14 can be restricted. That is, the ribs 62 play a role of restricting a movable range of the throttle pipe 18 and the acceleration grip 14.

Due to such a constitution, it is possible to prevent the acceleration grip 14 from being excessively largely rotated. Accordingly, it is possible to prevent an excessively large amount of tension from being applied to the return spring 32 whereby it is possible to prevent an excessively large stress from being applied to the return spring 32. As a result, the durability of the return spring 32 is enhanced.

Further, even when an impact is applied to the throttle pipe 18 due to falling of the motorcycle or the like by a chance so that the throttle pipe 18 is displaced toward a rotor 16 side, the ribs 62 are brought into contact with the distal end surface (right end surface) of the throttle pipe 18 so that the throttle pipe 18 is stopped. Accordingly, the ribs 62 receive a load from the throttle pipe 18.

As described above, the displacement of the throttle pipe 18 can be prevented and an impact to the throttle pipe 18 can be alleviated and hence, it is possible to prevent the rotor 16, the magnet 44, the back yoke 46, the Hall element 50 and the like from being damaged.

The present invention is not particularly limited to the above-mentioned embodiment, and various modifications are conceivable without departing from the gist of the present invention.

For example, in this embodiment, although the magnetic sensor (Hall element 50) is adopted as the detection means for detecting a rotational angle of the rotor 16, the detection means is not particularly limited to the magnetic sensor. That is, as shown in Fig. 4, a brush 72 (contact element) may be mounted on the rotor 16, and a resistor 74 to which the brush 72 is brought into slide contact may be adopted as a detection means. In Fig. 4, constitutional elements identical with the constitutional elements shown in Fig. 1 and Fig. 2 are given the same reference symbols.

In this case, when the position of the brush 72 on the resistor 74 is changed corresponding to a rotational angle of the rotor 16, along with the displacement of the brush 72, a resistance value between terminals to which the resistor 74 is electrically connected respectively is changed. A rotational angle of the rotor 16 can be obtained by converting such a change in resistance value to a rotational angle.

Further, the rotor 16 may be constituted of a single member.

The present invention is directed to provide a throttle device which can be easily assembled and can acquire stable quality of a return spring.

A throttle device 10 includes a rotor 16, and a casing 38 which surrounds a portion of the rotor 16 and houses a detection means for detecting a rotational angle of the rotor 16. The rotor 16 and the casing 38 are housed in a housing 60 mounted on a handle bar 12. A return spring 32 for returning a rotated rotor 16 to an original position has one end thereof engaged with a first engaging projection 30 of the rotor 16 and the other end thereof engaged with a second engaging projection 58 of the casing 38.

## Claims

1. A throttle device (10) which is mounted on a handle bar (12), and includes a rotor (16) which is rotated in an interlocking manner with the manipulation of an acceleration grip (14), the throttle device (10) comprising:
a casing (38) which surrounds a portion of the rotor (16) and houses a detection means for detecting a rotational angle of the rotor (16);
a housing (60) which houses the rotor (16) and the casing (38) therein and is mounted on the handle bar (12); and
a spiral-shaped return spring (32) for returning the rotated rotor (16) to an original position, and
the return spring (32) has one end thereof engaged with an engaging member (26) of the rotor (16) and the other end thereof engaged with the casing (38), the other end of the return spring (32) engaging a second engaging projection (58) axially projecting from an end surface of the casing (38), **characterized in that**
the engaging member (26) of the rotor (16) is concentrically fitted on the rotor body (24) and connected thereto by axially fitting a connecting projection portion (36) of the engaging member (26) into an aligned engaging recess portion (34) formed in the rotor body (24), and the one end of the return spring (32) engages a first columnar engaging portion (30) radially projecting from the engaging member (26), such that, during assembly of the throttle device, the other end of the spring (32) engages the second engaging projection (58) before the connecting projection portion (36) is pushed into the engaging recess portion (34).

2. The throttle device (10) according to claim 1, wherein a rib (62) for restricting the rotation of the acceleration grip (14) is formed on the housing (60).

3. The throttle device (10) according to claim 1 or claim 2, wherein engaging portions (20, 28) are formed on the acceleration grip (14) and the rotor (16) respectively, and the engaging portions (20, 28) are engaged with each other in a state where a clearance is formed therebetween.

4. The throttle device (10) according to any one of claims 1 to 3, wherein the detection means is a magnetic sensor (50).

5. The throttle device (10) according to any one of claims 1 to 3, wherein the throttle device (10) includes a contact element (72) mounted on the rotor (16), and the detection means is a resistor (74) with which the contact element (72) is brought into slide contact.

## Patentansprüche

1. Drosselvorrichtung (10), die an einer Lenkstange (12) angebracht ist und einen Rotor (16) enthält, der mit der Betätigung eines Gasgriffs (14) gekoppelt gedreht wird, wobei die Drosselvorrichtung (10) aufweist:
einen Mantel (38), der einen Abschnitt des Rotors (16) umgibt und ein Erfassungsmittel zum Erfassen eines Drehwinkels des Rotors (16) aufnimmt;
ein Gehäuse (60), das den Rotor (16) und den Mantel (38) darin aufnimmt und an der Lenkstange (12) angebracht ist; und
eine spiralförmige Rückstellfeder (32) zum Rückstellen des gedrehten Rotors (16) zu einer Ausgangsposition, und
das eine Ende der Rückstellfeder (32) mit einem Eingriffselement (26) des Rotors (16) in Eingriff steht, und ihr anderes Ende mit dem Gehäuse (38) in Eingriff steht,
wobei das andere Ende der Rückstellfeder (32) mit einem zweiten Eingriffsvorsprung (58) in Eingriff steht, der von einer Endfläche des Gehäuses (38) axial vorsteht,
**dadurch gekennzeichnet, dass**
das Eingriffselement (26) des Rotors (16) konzentrisch auf den Rotorkörper (24) aufgesetzt und damit verbunden ist, indem ein Verbindungsvorsprungsabschnitt (26) des Eingriffselements (26) axial in einen in dem Rotorkörper (24) ausgebildeten ausgerichteten Eingriffsvertiefungsabschnitt (34) eingesetzt ist, und das eine Ende der Rückstellfeder (32) mit einem ersten säulenförmigen Eingriffsabschnitt (30) in Eingriff steht, der von dem Eingriffselement (26) radial vorsteht, so dass, während des Zusammenbaus der Drosselvorrichtung, das andere Ende der Rückstellfeder (32) mit dem zweiten Eingriffsvorsprung (58) in Eingriff gelangt, bevor der Verbindungsvorsprungsabschnitt (36) in den Eingriffsvertiefungsabschnitt (34) gedrückt wird.

2. Die Drosselvorrichtung (10) nach Anspruch1, wobei eine Rippe (62) zum Begrenzen der Drehung des Gasgriffs (14) an dem Gehäuse (60) ausgebildet ist.

3. Die Drosselvorrichtung (10) nach Anspruch 1 oder Anspruch 2, wobei Eingriffsabschnitte (20, 28) jeweils an dem Gasgriff (14) und dem Rotor (16) ausgebildet sind, und die Eingriffsabschnitte (20, 28) in einem Zustand, zwischen diesen ein Abstand ausgebildet ist, miteinander in Eingriff stehen.

4. Die Drosselvorrichtung (10) nach einem der Ansprüche 1 bis 3, wobei das Erfassungsmittel ein magnetischer Sensor (50) ist.

5. Die Drosselvorrichtung (10) nach einem der Ansprüche 1 bis 3, wobei die Drosselvorrichtung (10) ein Kontaktelement (72) enthält, das an dem Rotor (16) angebracht ist, und das Erfassungsmittel einen Widerstand (74) ist, mit dem das Kontaktelement (72) in Gleitkontakt gebracht wird.

## Revendications

1. Dispositif d'étranglement (10) qui est monté sur un guidon (12), et comporte un rotor (16) qui est tourné de manière verrouillante avec la manipulation d'une poignée d'accélération (14), le dispositif d'étranglement (10) comprenant :
un carter (38) qui entoure une portion du rotor (16) et loge un moyen de détection pour détecter un angle de rotation du rotor (16) ;
un logement (60) qui loge le rotor (16) et le carter (38) à l'intérieur et est monté sur le guidon (12) ; et
un ressort de rappel en forme de spirale (32) pour rappeler le rotor (16) mis en rotation à une position d'origine, et
le ressort de rappel (32) a une de ses extrémités en prise avec un organe de mise en prise (26) du rotor (16) et son autre extrémité en prise avec le carter (38),
l'autre extrémité du ressort de rappel (32) mettant en prise une seconde saillie de mise en prise (58) saillant axialement d'une surface d'extrémité du carter (38),
**caractérisé en ce que**
l'organe de mise en prise (26) du rotor (16) est ajusté concentriquement sur le corps de rotor (24) et raccordé à celui-ci par ajustement axial d'une portion de saillie de raccordement (36) de l'organe de mise en prise (26) dans une portion d'évidement de mise en prise alignée (34) formée dans le corps de rotor (24), et ladite extrémité du ressort de rappel (32) met en prise une première portion de mise en prise colonnaire (30) saillant radialement de l'organe de mise en prise (26), de sorte que, pendant un assemblage du dispositif d'étranglement, l'autre extrémité du ressort (32) mette la seconde saillie de mise en prise (58) avant que la portion de saillie de raccordement (36) soit poussée dans la portion d'évidement de mise en prise (34).

2. Dispositif d'étranglement (10) selon la revendication 1, dans lequel une nervure (62) pour limiter la rotation de la poignée d'accélération (14) est formée sur le logement (60).

3. Dispositif d'étranglement (10) selon la revendication 1 ou la revendication 2, dans lequel des portions de mise en prise (20, 28) sont formées sur la poignée d'accélération (14) et le rotor (16) respectivement, et les portions de mise en prise (20, 28) sont mises en prise l'une avec l'autre dans un état où un débattement est formé entre elles.

4. Dispositif d'étranglement (10) selon l'une quelconque des revendications 1 à 3, dans lequel le moyen de détection est un capteur magnétique (50).

5. Dispositif d'étranglement (10) selon l'une quelconque des revendications 1 à 3, dans lequel le dispositif d'étranglement (10) comporte un élément de contact (72) monté sur le rotor (16), et le moyen de détection est un résistor (74) avec lequel l'élément de contact (72) est amené en contact coulissant.
